# DEMANDE DE BREVET EUROPEEN

(11) **EP 1 114 953 A1**
(43) Date de publication de la demande: **11.07.2001**
(21) Numéro de dépôt: 00403565.5
(22) Date de dépôt: 15.12.2000
(51) Int. Cl.: F16K 1/12, F16K 27/07

(54) **Vanne de vidange d'un récipient contenant un fluide**

(30) Priorité: 07.01.2000 FR 0000189
(71) Demandeur: L'air Liquide Société Anonyme pour l'étude et l'exploitation des procédés Georges Claude, 75321 Paris Cédex 07 (FR)
(72) Inventeur: Disdier, Jean-Marie, 20020 Arese (MI) (IT); Germain, Jean-Pierre, 78180 Montigny le Bretonneux (FR)
(74) Mandataire: Mellul-Bendelac, Sylvie Lisette

(57) **Abrégé**

Vanne (6) de vidange d'un récipient (2) contenant un fluide, comportant une pièce tubulaire (9) contenant un clapet (11) et pourvue de moyens (34, 32...) de commande de ce dernier, caractérisée en ce que lesdits moyens de commande sont disposés coaxialement à l'axe longitudinal (XX) de la pièce tubulaire, qui est également l'axe d'écoulement du fluide ; la pièce tubulaire (9) comprend un premier tube (12) dont une extrémité est fixée à un support (13) du clapet (11), et un second tube (21) concentrique au premier tube et solidaire à une de ses extrémités d'une cuvette (20) de révolution débouchant d'un côté dans l'intérieur du récipient (2) et du côté opposé délimitant un siège (24) pour le clapet (11); cette cuvette et le clapet sont coaxiaux à l'axe longitudinal (XX) de la pièce tubulaire (9) et au moins un alésage (19) de passage du fluide est ménagé dans le support du clapet. L'invention permet avantageusement de fixer la vanne (6) directement sous le fond (2) du récipient (1), dans l'axe d'écoulement (XX) de l'orifice (7) de vidange et de maintenir les organes de commande (34, 32, 12...) de la vanne dans une zone de température positive en dehors des périodes de vidange, ce qui évite tout risque de gel de ceux-ci et donc de blocage de la vanne.

## Description

La présente invention a pour objet une vanne de vidange d'un récipient contenant un fluide, notamment un liquide cryogénique, comportant une pièce tubulaire contenant un clapet et pourvue de moyens de commande de ce dernier. L'invention concerne également l'ensemble constitué par la vanne et le récipient.

On sait que, classiquement, les vannes sont équipées d'une commande disposée latéralement par rapport à l'axe d'écoulement du fluide dans la vanne. D'autre part les vannes de vidange de récipients contenant par exemple un liquide cryogénique tel que l'azote liquide comme on en utilise dans l'industrie agroalimentaire, sont raccordées à une tuyauterie de liaison avec l'orifice de vidange du fond du récipient. En effet elles ne peuvent être directement raccordées à ce fond en raison du risque de formation de glace qui pourrait bloquer le fonctionnement de la vanne.

La présence de cette tuyauterie rend plus difficile une vidange complète, car des résidus de liquide cryogénique tendent à y stagner et ne peuvent que difficilement être complètement purgés. Dans le cas où le récipient est utilisé dans l'industrie alimentaire pour la conservation d'aliments par le froid, la persistance de résidus de liquide et éventuellement d'autres débris dans la tuyauterie formant l'extension cryogénique jusqu'à la vanne de vidange génère en outre un risque d'apparition de bactéries indésirables.

Enfin ces vannes de l'état de la technique ne peuvent être utilisées qu'horizontalement pour que la vanne et son système d'étanchéité soient maintenus en température positive en dehors des périodes de vidange. En définitive, une vidange totale est pratiquement impossible à obtenir avec ces vannes, ce qui constitue un inconvénient très sensible en particulier dans l'industrie alimentaire.

Pour obtenir une vidange totale, il serait nécessaire de fixer la vanne directement sur le fond du récipient à vidanger, ce qui n'est pas possible pour les raisons exposées ci-dessus.

L'invention a donc pour but la réalisation une vanne permettant une vidange totale d'un récipient, contenant un fluide notamment cryogénique, et qui soit agencée de façon à pouvoir être fixée directement sur le fond du récipient à vidanger.

Suivant l'invention, la vanne de vidange d'un récipient contenant un fluide est caractérisée en ce que ses moyens de commande sont disposés coaxialement à l'axe longitudinal de la pièce tubulaire, qui est également l'axe d'écoulement du fluide.

Suivant un mode de réalisation de l'invention, la pièce tubulaire comprend un premier tube dont une extrémité est fixée à un support du clapet, et un second tube concentrique au premier tube et solidaire à une de ses extrémités d'une cuvette de révolution débouchant d'un côté dans l'intérieur du récipient et du côté opposé délimitant un siège pour le clapet ; cette cuvette et le clapet sont coaxiaux à l'axe longitudinal de la pièce tubulaire et au moins un alésage de passage du fluide est ménagé dans le support du clapet.

Suivant d'autres caractéristiques de l'invention, la seconde extrémité du second tube est fixée à un corps annulaire entourant un presse-étoupe fixé au premier tube et à un volant de commande de la vanne, ce volant et le presse-étoupe étant coaxiaux à l'axe longitudinal de ladite pièce tubulaire; le presse-étoupe est muni d'un filetage coopérant avec un taraudage du corps annulaire de manière que la rotation du volant et du presse-étoupe entraîne en translation axiale le premier tube ainsi que ledit support et le clapet, tandis que le second tube, le corps annulaire et la cuvette restent fixes.

La vanne est fixée directement au fond du récipient à vidanger, dans l'axe de l'orifice de vidange, son agencement permettant de maintenir les moyens de commande (volant rotatif, presse-étoupe, tube vertical portant le support de clapet) dans une zone suffisamment éloignée du clapet et donc de température constamment positive, ce qui évite tout risque de gel du système de commande et de manoeuvre.

Le corps annulaire solidaire du second tube est lui-même fixé à une pièce cylindrique dont l'extrémité supérieure peut être soudée à une paroi horizontale d'une enveloppe du récipient, traversée par l'extrémité supérieure de la vanne raccordée au fond du récipient ; un vide est réalisé entre cette paroi horizontale et le fond du récipient.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en élévation schématique d'un récipient et d'une vanne conforme à l'invention.

La figure 2 est une vue en coupe verticale longitudinale à échelle agrandie, de la vanne de vidange de la figure 1.

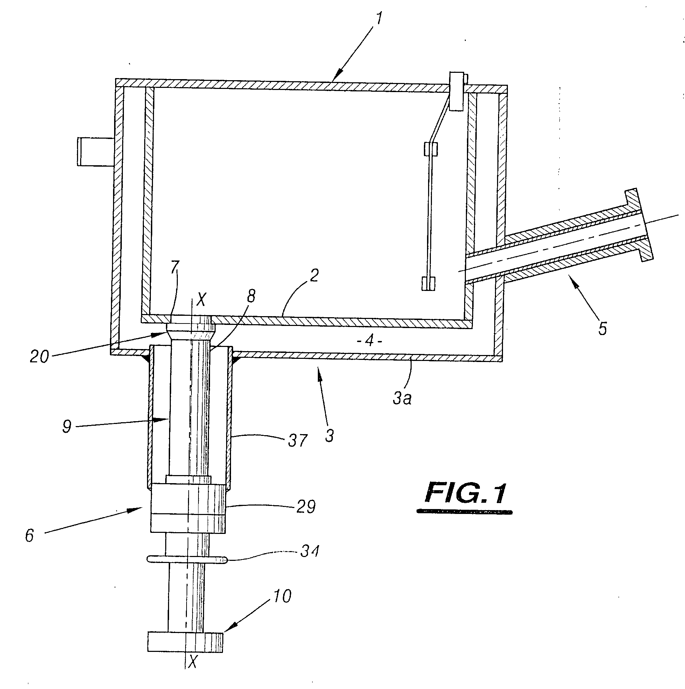

On voit à la figure 1 un récipient 1 à fond 2 horizontal qui peut contenir un liquide cryogénique à très basse température tel que l'azote. Le récipient 1 est disposé dans une enceinte 3 à fond horizontal qui délimite entre le récipient 1 et l'enceinte 3 un espace 4 normalement sous vide. Des produits non représentés peuvent être introduits dans le récipient 1 par un dispositif d'amenée latérale 5.

Le récipient 1 est équipé d'une vanne 6 de vidange totale du fluide contenu dans le récipient, disposée sous le fond 2 suivant l'axe XX vertical d'une ouverture 7 de vidange pratiquée dans le fond 2 ; la partie supérieure de la vanne 6 traverse une ouverture 8 de la paroi horizontale 3a de l'enceinte 3, l'ouverture 8 étant coaxiale à l'orifice 7 de vidange.

La vanne 6 comporte une pièce tubulaire 9 contenant un clapet 11 et pourvue de moyens de commande de ce dernier, ces moyens étant disposés coaxialement à l'axe longitudinal XX de la pièce tubulaire 9, qui est également l'axe d'écoulement du fluide intérieur au récipient 1, lequel doit être vidangé périodiquement.

La pièce tubulaire 9 comprend un premier tube 12 coaxial à l'axe XX et à l'orifice 7 de vidange. Une extrémité supérieure de ce tube 12 est fixée à un support 13 du clapet 11, lequel est constitué d'une tête 14 et d'une tige 15 insérée dans un logement axial 16 du support 13 dans lequel elle est montée librement rotative sur une couronne de billes 17 logées dans des gorges complémentaires de la tige 15 et de la paroi du logement 16. Les billes 17 peuvent être introduites en place dans les gorges par un canal radial 18 ménagé dans le support 13. Au moins un alésage 19 de passage du fluide est ménagé dans le support 13 qu'il traverse de part en part parallèlement à l'axe XX.

La pièce tubulaire 9 comprend un second tube 21 concentrique au premier tube 12 et solidaire à l'une de ses extrémités, à savoir son extrémité supérieure, d'une cuvette 20 de révolution autour de l'axe XX et dont le bord d'ouverture supérieur affleure le plan intérieur 2a du fond 2 du récipient 1. La cuvette 20 est constituée d'une partie conique 22 et d'une jupe cylindrique 23 toutes deux coaxiales à l'axe XX et réalisées monobloc. L'extrémité inférieure de la jupe cylindrique 23 délimite un siège annulaire 24 d'appui pour la tête 14 du clapet 11.

Le support 13 est solidaire d'un dispositif d'étanchéité 25 annulaire, interposé entre la jupe 23 et le second tube 21. Ce dispositif d'étanchéité 25, d'un type connu en soi, comprend un joint d'étanchéité 26 interposé entre deux garnitures 27, 28 de maintien pouvant glisser sur la paroi extérieure de la jupe 23, l'extrémité inférieure de la garniture 28 étant solidarisée de façon connue en soi, avec le pourtour du support 13.Le dispositif d'étanchéité 25 peut donc glisser entre la jupe 23 et le second tube 12 en étant entraîné par le support 13, lorsque celui-ci ainsi que le clapet 11 sont actionnés par des moyens de commande qui seront décrits ci-après.

La seconde extrémité du second tube 21, c'est à dire son extrémité inférieure, est fixée à un corps annulaire 29 entourant un presse-étoupe 31 équipé à sa partie supérieure d'un filetage 32 coopérant avec un taraudage 33 du corps 29. Le presse-étoupe 31 est fixé extérieurement au premier tube 12 ainsi qu'à un volant 34 de commande de la vanne 6, par exemple par soudage, le volant 34 et le presse-étoupe 31, de même que le corps 29 étant coaxiaux à l'axe longitudinal XX de la vanne. Un joint d'étanchéité 30 est logé entre le presse-étoupe 31 et le corps extérieur 29.

L'extrémité inférieure du premier tube 12 est munie d'une plaque obturatrice 41 maintenue par un collier 10.

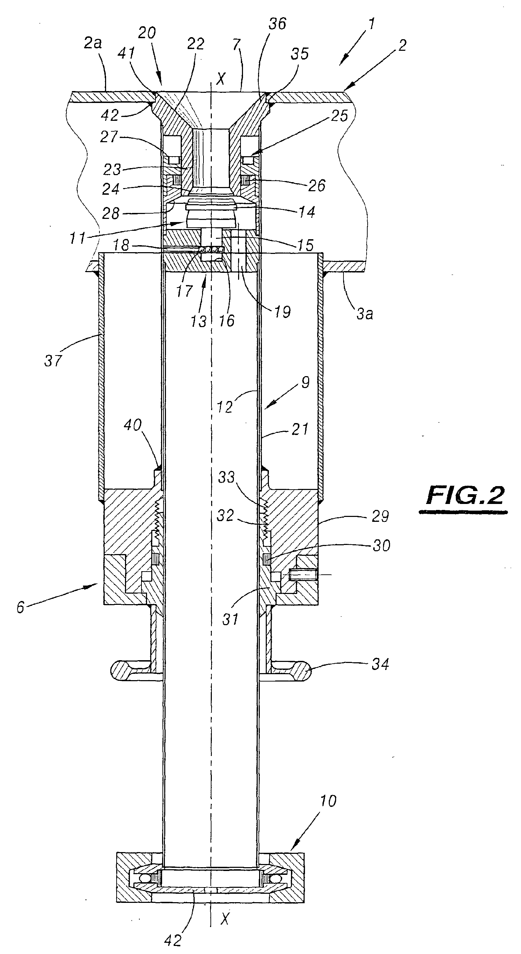

Sur l'extrémité annulaire de la partie conique 22 est agencé un épaulement extérieur 35 délimitant un collet intérieur 36, qui peuvent venir s'emboîter en appui étanche sur un bord de profil conjugué de l'orifice 7 de vidange. Ce bord vient donc en appui sur l'épaulement horizontal 35 d'une part, et en butée contre la paroi extérieure du collet vertical 36 d'autre part, comme on le voit à la partie supérieure de la figure 2. Le collet 36 et l'épaulement 35 sont fixés au bord de l'orifice 7 respectivement par des cordons de soudure 41 et 42. Cet agencement est tel que la surface du collet 36 et la surface intérieure 2a du fond 2 du récipient 1 sont pratiquement dans un même plan horizontal, toute partie en saillie susceptible de gêner une vidange totale étant ainsi éliminée. La vidange obtenue est donc plus complète qu'avec les vannes antérieures.

Le corps 29 est solidarisé à sa périphérie avec un capot tubulaire 37 dont la partie supérieure est fixée à la paroi horizontale 3a de l'enceinte 3.

La mise en oeuvre de la vanne de vidange 6 qui vient d'être décrite, ainsi que de l'ensemble du récipient 1 et de cette vanne s'opère de la manière suivante.

Dans la position représentée à la figure 2, la vanne 6 est ouverte, son clapet 11 étant situé à un certain écart du siège 24.

Pour fermer la vanne, l'opérateur manoeuvre en rotation le volant de commande 34, qui entraîne en rotation le presse-étoupe 31. En raison de la coopération du filetage 32 et du taraudage 33, le presse-étoupe 31 exécute une translation longitudinale suivant l'axe XX, qui entraîne le premier tube 12, le support 13, le clapet 11 ainsi que la garniture d'étanchéité 25. Ce déplacement se poursuit jusqu'à ce que le clapet 11 vienne en appui sur son siège 24.

La présence de la couronne de billes de roulement 17 permet à la tête 14 de tourner librement autour de l'axe XX tout en subissant un léger désaxage par rapport à cet axe, et donc de trouver le meilleur emplacement du clapet 11 sur son siège 24, ce qui assure une parfaite étanchéité de la vanne au fluide contenu dans le récipient 1.

Lorsque le clapet 11 est en position de fermeture, les organes de commande 34, 31, 12 sont situés dans une zone éloignée de la zone supérieure traversant la région sous vide 4 et à très basse température, et restent ainsi dans une zone de température positive. lls ne peuvent donc pas être grippés par le gel comme cela était le cas pour les installations de vannes de vidange de la technique antérieure.

La manoeuvre d'ouverture de la vanne 6 s'effectue très simplement par rotation inverse du volant de commande 34, qui entraîne en translation vers le bas le presse-étoupe 31 le premier tube 12, le support 13 et le clapet 11. Le liquide s'écoule alors entre le siège 24 et le clapet 11, puis traverse le support 13 par l'alésage 19 et est évacué de la vanne par retrait de la plaque 41.

En plus des avantages déjà indiqués, la vanne de vidange 6 et l'ensemble récipient 2-vanne 6 conformes à l'invention présentent les suivants.
- La vanne 6 est fixée directement sous le fond 2 du récipient 1 à vidanger avec ses moyens de commande 34, 32, 12... situés dans l'axe XX d'écoulement du fluide à vidanger, ce qui est particulièrement commode. En effet cela permet d'éliminer les tuyauteries intermédiaires entre le fond et la vanne, formant extension cryogénique, qui étaient utilisées jusqu'à présent, et rend plus aisée la manoeuvre de la vanne.
- L'agencement du support 13 et du clapet 11 à la partie supérieure de la vanne 6 permet d'arrêter le liquide cryogénique au niveau du clapet, donc à la partie supérieure de la vanne, et par conséquent de maintenir les éléments situés au-dessous et en particulier les moyens de commande 34, 31,... dans une zone de température positive, ce qui favorise une bonne manoeuvrabilité de la vanne en évitant tout risque de gel des organes de commande.
- Le fait que la vanne 6 puisse être fixée au-dessous du fond 2 et non latéralement à celui-ci comme dans les systèmes antérieurs connus, supprime les tuyauteries et vannes en saillie sur lesquelles du personnel peut venir s'accrocher par manque d'attention, avec des risques d'ouverture accidentelle de la vanne et de jet inopiné de liquide cryogénique sur le sol.

L'invention n'est pas limitée au mode de réalisation décrit et peut comporter diverses variantes d'exécution. Ainsi par exemple les moyens de commande en translation de l'équipage mobile 13, 11, 25 pourraient être différents de ceux représentés.

## Revendications

1. Vanne (6) de vidange d'un récipient (2) contenant un fluide cryogénique, comportant une pièce tubulaire (9) contenant un clapet (11) et pourvue de moyens (34, 32...) de commande de ce dernier, caractérisée en ce que lesdits moyens de commande sont disposés coaxialement à l'axe longitudinal (XX) de la pièce tubulaire, qui est également l'axe d'écoulement du fluide.

2. Vanne selon la revendication 1, caractérisée en ce que la pièce tubulaire (9) comprend un premier tube (12) dont une extrémité est fixée à un support (13) du clapet (11), et un second tube (21) concentrique au premier tube et solidaire à une de ses extrémités d'une cuvette (20) de révolution débouchant d'un côté dans l'intérieur du récipient (2) et du côté opposé délimitant un siège (24) pour le clapet (11), cette cuvette et le clapet étant coaxiaux à l'axe longitudinal (XX) de la pièce tubulaire (9) et au moins un alésage (19) de passage du fluide étant ménagé dans le support du clapet.

3. Vanne selon la revendication 2, caractérisée en ce que la seconde extrémité du second tube (21) est fixée à un corps annulaire (29) entourant un presse-étoupe (31) fixé au premier tube (12) et à un volant (34) de commande de la vanne (6), ce volant et le presse-étoupe étant coaxiaux à l'axe longitudinal (XX) de ladite pièce tubulaire (9), et en ce que le presse-étoupe est muni d'un filetage (32) coopérant avec un taraudage (33) du corps annulaire de manière que la rotation du volant (34) et du presse-étoupe entraîne en translation axiale le premier tube (12) ainsi que ledit support (13) et le clapet (11), tandis que le second tube(21), le corps annulaire (29) et la cuvette (21) restent fixes.

4. Vanne selon la revendication 3, caractérisée en ce que le support (13) de clapet (14) est solidaire d'un dispositif d'étanchéité (25) annulaire interposé entre une jupe (23) de la cuvette (20) et le second tube (21), ce dispositif pouvant glisser entre la jupe et le second tube lorsque le clapet (11) et son support sont actionnés par le volant (34) de commande, et le siège (24) du clapet étant agencé sur une extrémité de ladite jupe (23).

5. Vanne selon l'une des revendications 2 à 4, caractérisée en ce que le clapet (11) comporte une tige (15) montée librement rotative dans le support (13) sur une couronne (17) de billes logées dans des gorges complémentaires de la tige du clapet et d'un logement de la tige dans le support, cet agencement autorisant également un léger désaxage du clapet.

6. Vanne selon l'une des revendications 2 à 5, caractérisée en ce que la cuvette (20) comprend une partie conique (22) apte à déboucher dans l'intérieur du récipient (1) et sur l'extrémité annulaire de laquelle est agencé un épaulement (35) extérieur délimitant un collet intérieur (36), qui peuvent venir en appui étanche sur le bord d'un orifice (7) de vidange de profil conjugué, agencé dans le fond (2) du récipient (1), de telle sorte que la surface du collet et la surface intérieure (2a) du fond (2) du récipient (1) soient pratiquement dans un même plan horizontal.

7. Ensemble comportant un récipient (1) dans le fond (2) duquel est aménagé un orifice (7) de vidange d'un fluide cryogénique contenu dans le récipient (1), et une vanne (6) de vidange conforme à l'une quelconque des revendications 1 à 6, cette vanne étant fixée sous le fond (2) du récipient en étant orientée sensiblement verticalement suivant l'axe vertical (XX) d'écoulement du fluide à vidanger.
